# EUROPÄISCHE PATENTSCHRIFT

(11) **EP 3 459 163 B1**
(45) Veröffentlichungstag und Bekanntmachung des Hinweises auf die Patenterteilung: **21.01.2026**
(21) Anmeldenummer: 17746045.8
(22) Anmeldetag: 25.07.2017
(51) Int. Cl.: H02K 41/03, H02K 1/2786, H02K 1/2795, H02K 5/10

(54) **ANTRIEBSVORRICHTUNG**
DRIVE DEVICE
DISPOSITIF D'ENTRAINEMENT

(30) Priorität: 03.08.2016 EP 16182608
(43) Veröffentlichungstag der Anmeldung: 27.03.2019
(73) Patentinhaber: Innomotics GmbH, 90441 Nürnberg (DE)
(72) Erfinder: HELLMUTH, Torsten, 91058 Erlangen (DE); LAU-BOMERT, Wolfgang, 34119 Kassel (DE)
(74) Vertreter: Michalski Hüttermann & Partner Patentanwälte mbB
(86) Internationale Anmeldenummer: PCT/EP2017/068733
(87) Internationale Veröffentlichungsnummer: WO 2018/024538

(56) Entgegenhaltungen:
- EP-A1- 2 481 701
- EP-A1- 2 562 102
- EP-B1- 1 446 858
- DE-A1- 102010 040 724
- DE-A1- 2 034 307
- US-A1- 2003 094 524
- US-A1- 2009 051 253
- US-A1- 2010 083 851
- US-A1- 2013 306 773

## Beschreibung

Die Erfindung betrifft eine Antriebsvorrichtung für eine Arbeitsmaschine für die Schwerindustrie, insbesondere für die Rohstoff- und Bergbauindustrie. Die Erfindung betrifft weiterhin eine Arbeitsmaschine sowie eine Verwendung einer Antriebsvorrichtung.

In der Schwerindustrie, insbesondere in der Rohstoff- und Bergbauindustrie, werden Arbeitsmaschinen eingesetzt, die durch hohe Antriebsleistungen gekennzeichnet sind, um die gestellten Aufgaben zu erfüllen. Solche Arbeitsmaschinen sind z.B. Schaufelradbagger, Gurtförderer, Brecher, Mühlen, Schachtförderanlagen. Neben der Höhe der Antriebsleistung und des Drehmomentes müssen moderne Antriebe auch weiteren Anforderungen genügen. Dies sind z.B. Bereitstellung verschiedener Drehzahlen und Drehmomente je nach Bedarf der Arbeitsmaschine, Verteilung von Lasten z.B. bei Mehrfachantrieben, Verhinderung bzw. Begrenzung von Lastspitzen. Darüber hinaus sind hohe Anforderungen an die Zuverlässigkeit und die Effizienz gestellt.

Konventionelle Antriebsvorrichtungen setzen sich aus mehreren Komponenten zusammen, insbesondere gehören dazu Frequenzumrichter, Elektromotor, Kupplung, Getriebe, ggf. noch eine weitere Kupplung und eine Bremsvorrichtung. Mit der Anzahl der Komponenten erhöht sich jedoch auch die Ausfallwahrscheinlichkeit des Antriebs. Aus diesem Grund werden immer häufiger Direktantriebe in den oben genannten Arbeitsmaschinen eingesetzt. Ein Direktantrieb für eine Bandförderanlage ist z.B. in der Offenlegungsschrift EP 2 562 102 A1 beschrieben. Ein Direktantrieb setzt sich in der Regel nur aus einem Frequenzumrichter und einem Elektromotor zusammen, ggf. kommen noch eine Kupplung und eine Bremsvorrichtung dazu. Dadurch entsteht eine Reihe von Vorteilen, u.a. ist die Zuverlässigkeit des Antriebes verbessert, da die Anzahl der Komponenten geringer ist, der Wartungsaufwand wird ebenfalls geringer.

Die Elektromotoren für den Einsatz in einem Direktantrieb sind in der Regel langsam laufende Synchronmotore, welche durch die direkte Verbindung mit der Arbeitsmaschine ein erforderliches, hohes Drehmoment und eine kleine Drehzahl zur Verfügung stellen. Solche Synchronmotoren umfassen einen Stator und einen Rotor. Der Rotor ist mechanisch mit der Arbeitsmaschine verbunden. Zwischen dem Rotor und dem Stator gibt es keinen direkten mechanischen Kontakt, sie sind durch einen Luftspalt (je nach Ausführung 2 mm bis 20 mm) voneinander getrennt. Wird der Luftspalt nicht eingehalten, kommt es zu einem erheblichen Schaden im Motor. Da der Rotor und der Stator dabei mechanisch getrennt verlagert sind, ist für die Aufrechterhaltung des Luftspalts ein großer Aufwand erforderlich. Zur Sicherung des Luftspaltes werden die Fundamente bzw. die Unterstützungskonstruktion besonders stark dimensioniert, damit eine Relativbewegung zwischen Rotor und Stator weitestgehend verhindert wird. Ergänzend kann eine Luftspaltüberwachung vorgesehen sein, um rechtzeitig Veränderungen zu erkennen. Bei entsprechenden Veränderungen im Luftspalt wird ein Signal generiert, welches zur Stillsetzung des Antriebes führen kann.

Die eingesetzten Synchronmotoren sind in der Regel fremderregt, d.h. der Rotor wird über Schleifringe mit einem Erregerstrom versorgt. Die Schleifringe, insbesondere die Bürsten zum Übertragen des Erregerstromes, sind Verschleißteile. Deren Kontrolle, Wartung und Austausch im Rahmen der Anlagenwartung erfolgt.

Bei mobilen oder semimobilen Arbeitsmaschinen ist das Gewicht der Antriebsvorrichtung ein wichtiges Kriterium. Leichtere Antriebsvorrichtungen erlauben leichtere Unterkonstruktionen und führen dadurch zu leichteren und somit günstigeren Arbeitsmaschinen. Ausgehend von konventionellen Antriebsvorrichtungen hinsichtlich der Gewichtsthematik, sind die bekannten Direktantriebe für gleiche Antriebsleistungen leichter. Wird jedoch die komplette Anlage betrachtet, ist sie bedingt durch den Zusatzaufwand zur Sicherung des Luftspaltes im Motor in Summe jedoch meistens schwerer.

Zuverlässigkeit und Verfügbarkeit der Antriebstechnik ist ein weiteres wichtiges Kriterium für Anlagen im Bereich der Rohstoff- und Bergbauindustrie. Je weniger Komponenten zu einem Antriebsstrang gehören, desto höher ist die Verfügbarkeit.

Um eine hohe Anlagenverfügbarkeit zu erreichen, legen Betreiber sich oft komplette Komponenten der Antriebsvorrichtungen oder auch relevante Teile von Direktantrieben als Ersatzteil auf Lager, um im Schadensfall die beschädigten Komponenten austauschen und/oder reparieren zu können. Auch gibt es Konzepte und Lösungen mit Mehrfachantrieben, bei denen im Schadensfall ein Antrieb abgewählt wird und mit einem oder mehreren anderen Antrieben die Arbeitsmaschine mit einer Teilleistung weiter betrieben wird.

EP 2 481 701 A1 offenbart ein Hubwerk für einen Containerkran. Das Hubwerk umfasst zumindest eine Seiltrommel zum Anheben einer Last sowie zumindest einen die Seiltrommel antreibendem elektrischen Motor, der als ein Segmentmotor ausgebildet sein kann.

US 2010/083851 A1 offenbart einen elektrischen Antrieb zum Erzeugen von Schwenk- oder Rotationsbewegungen. Der Antrieb umfasst ein Sekundärteil mit einer kreisförmigen oder gewölbten Form und ein Primärteil mit mindestens zwei geraden Primärteilsegmenten, die entsprechend der Form des Sekundärteils in einem vorgegebenen Winkel zueinander angeordnet sind.

US 2009/051253 A1 offenbart eine elektrische Maschine zum Antreiben eines Zylinders einer Druckmaschine. Die elektrische Maschine weist ein Primärteil mit Primärteilsegmenten und ein Sekundärteil mit Sekundärteilsegmenten auf.

DE 2034 307 A1 offenbart eine Antriebstrommel für Gurtförderanlagen, deren Trommelmantel oder fest damit zusammenhängende Teile relativ zu bogenförmig gekrümmten feststehenden Ständerwicklungen eines Linearmotors beweglich sind.

US 2003/094524 offenbart ein getriebeloses Mahlwerk mit einem Stator, der mehrere lineare Statorabschnitte aufweist, und einem Gehäuse, an dem wenigstens eine Wicklung angeordnet ist, die von dem Stator durch einen Luftspalt beabstandet ist.

DE 10 2010 040 724 A1 offenbart ein Verfahren und eine Anordnung zum Ermitteln des Mahlgrades eines Mahlgutes in einer Mühle. Die Mühle weist eine Trommel auf, in der sich das Mahlgut während des Mahlvorganges befindet und die während des Mahlvorganges von einem magnetischen Antrieb mit zumindest einem Magnetsegment angetrieben wird.

EP 2 562 102 A1 offenbart eine Bandförderanlage und ein Verfahren zu deren Betrieb sowie deren Verwendung. Die Bandförderanlage für die Schwerindustrie, insbesondere für die Rohstoff- oder Bergbauindustrie, umfasst zumindest eine Tragkonstruktion, ein Förderband und mindestens eine Antriebsvorrichtung zum Antrieb des Förderbands, wobei die Antriebsvorrichtung mindestens eine Antriebswelle, mindestens eine Antriebswellen-Lageranordnung, mindestens eine Antriebsrolle und mindestens einen fremderregten Antriebsmotor in Form eines Frequenzumrichter-gespeisten Wechselstrom-Synchronmotors mit einem Stator und einem Rotor umfasst. Die Antriebswelle und der mindestens eine Antriebsmotor sind getriebelos miteinander verbunden, wobei eine koaxiale Anordnung von Rotor und Antriebswelle vorliegt, wobei jede Antriebswelle durch mindestens einen Rotor geführt ist.

Aus der US 2013/0306773 A1 ist eine Rohrmühle bekannt, wobei die Rohrmühle einen um eine Rotationsachse rotierbar angeordneten Körper aufweist, wobei Mahlgut zur Zerkleinerung in den Körper einbringbar ist, wobei die Rohrmühle zum rotierenden Antreiben des Körpers einen Elektromotor aufweist, wobei der Elektromotor einen mit dem Körper drehfest verbundenen um den Körper angeordneten Rotor und ein um den Rotor ruhend angeordnetes Statorjoch aufweist. Die Rohrmühle weist ein um mindestens die Hälfte des Umfangs des Statorjochs umlaufendes Betonelement auf, wobei das Statorjoch derart mit dem Betonelement verbunden ist, dass auf das Statorjoch einwirkende Kräfte auf das Betonelement übertragen werden.

EP 1 446 858 B1 offenbart einen bürstenlosen Permanentmagnetmotor mit einem ringförmigen Rotor und einem modular aufgebauten Stator, dessen Segmente jeweils magnetisch isoliert sind. Jedem Statorsegment ist ein eigenes Steuer- und Leistungselektronikmodul zugeordnet, das innerhalb des Stators angeordnet ist und optional über eine separate Energiequelle verfügt.

Der Erfindung liegt die Aufgabe zugrunde, eine Antriebsvorrichtung mit einer hohen Zuverlässigkeit im Betrieb. Der Erfindung liegt weiterhin die Aufgabe zugrunde, eine Arbeitsmaschine mit einer hohen Zuverlässigkeit anzugeben.

Die erste Aufgabe wird erfindungsgemäß gelöst durch eine Antriebsvorrichtung für eine Arbeitsmaschine für die Schwerindustrie, insbesondere für die Rohstoff- und Bergbauindustrie, umfassend einen permanentmagneterregten Motor, wobei der Motor einen Rotor und einen Stator aufweist und wobei der Motor ein Segmentmotor ist, bei dem der Rotor und der Stator aus mehreren Segmenten zusammengesetzt sind, und wobei die Segmente des Stators einzeln vom Frequenzumrichter mit elektrischem Strom versorgbar sind, wobei dass der Rotor und der Stator auf einem gemeinsamen Lagerungselement gelagert sind, wobei eine Ansteuerung der einzelnen Motorsegmente den Betrieb des Motors in Teillastbereichen erlaubt, wobei der Rotor einen ringförmigen, sich in Umfangsrichtung erstreckenden axial geöffneten Spalt bildet, der axial durch eine Rotorwandung sowie radial durch eine radial innenliegende ringförmige Rotorwandung und eine radial außenliegende ringförmige Rotorwandung begrenzt ist, wobei der Stator derart im Spalt angeordnet ist, dass die auf der radial innenliegenden Rotorwandung angeordneten Rotorsegmente den dort gegenüberliegenden Statorsegmenten zugeordnet sind, wobei zwischen der radial außenliegenden Rotorwandung und dem Stator eine Dichtung vorgesehen ist, die den im Bereich zwischen den Rotorsegmenten und den Statorsegmenten ausgebildeten Luftspalt vor dem Eindringen von Verunreinigungen schützt.

Die Erfindung basiert auf der Idee, durch die Segmentbauweise des Motors eine deutliche Verbesserung der Verfügbarkeit des Motors zu erreichen, wodurch auch die Zuverlässigkeit im Betrieb der Antriebsvorrichtung erhöht wird. Aufgrund des modularen Aufbaus und der Austauschbarkeit ist höchste Einbau-Flexibilität erreicht. Weitere Vorteile eines Segmentmotors sind das einfachere Handling und Montage sowie die gute Skalierbarkeit des Moments.

Die Segmente umfassen insbesondere sowohl Segmente für den Stator als auch Segmente für den Rotor, die entsprechend zusammengesetzt einen permanenterregten Synchronmotor ergeben. Die Motorsegmente sind insbesondere an oder in die jeweilige Arbeitsmaschine integriert. Die Ausführung als permanenterregter Motor erlaubt die Einsparung von Schleifringen und Bürsten, wodurch sich der Wartungsaufwand und Ersatzteilkosten verringern. Die Segmente des Rotors, weiterhin auch als Rotor-Segmente bezeichnet, sind durch Permanentmagnete gebildet. Lediglich die Segmente des Stators, weiterhin auch als Stator-Segmente bezeichnet, werden verkabelt.

Gemäß der Erfindung sind der Rotor und der Stator auf einem gemeinsamen Lagerungselement gelagert. Das Lagerungselement ist hierbei eine rotierende Welle oder eine Achse. Durch diese Art der Lagerung wird eine Relativbewegung des Rotors und des Stators zueinander verhindert und somit wird der erforderliche Luftspalt beibehalten. Eine Tragkonstruktion für den Rotor und eine Tragkonstruktion für den Stator sind derart ausgestaltet, dass eine Rotation des Rotors im Betrieb der Arbeitsmaschine ermöglicht ist, während der Stator ortsfest gelagert wird.

Gemäß der Erfindung umfasst die Antriebsvorrichtung weiterhin einen Frequenzumrichter, wobei die Segmente des Stators einzeln vom Frequenzumrichter mit elektrischem Strom versorgbar sind. Der Frequenzumrichter erlaubt es, den Motor entsprechend den Anforderungen der jeweiligen Arbeitsmaschine zu steuern und zu regeln. Durch die separate Versorgung der Stator-Segmente mit Strom werden eine besonders hohe Flexibilität und ein möglichst störungsfreier Betrieb der Arbeitsmaschine gewährleistet, denn bei Ausfall eines Stator-Segments kann die Arbeitsmaschine mit verringerter Leistung weiter angetrieben werden. Die Ansteuerung der einzelnen Motorsegmente erlaubt auch den Betrieb des Motors in Teillastbereichen, wenn z.B. ein Segment ausfällt oder auch die Arbeitsmaschine weniger Antriebsleistung benötigt. Zu einem ist dies ein Beitrag zur Erhöhung der Verfügbarkeit des Antriebes und zum anderem kann sehr flexibel auf die Anforderungen der Arbeitsmaschine reagiert werden. Wenn beispielsweise keine Nennleistung erforderlich ist, kann der Betrieb mit kleinerer Leistung fortgesetzt werden. Zu diesem Zweck werden einzelne Stator-Segmente abgeschaltet. Auf diese Weise wird Energie eingespart und die Stromkosten werden verringert.

Bevorzugt sind die Segmente des Rotors kreisförmig angeordnet. Die Form des Rotors ist dabei optimal an das Lagerungselement, welches insbesondere als eine Welle oder eine Achse ausgebildet ist, angepasst. Die Anzahl der Rotor-Segmente ergibt sich aus der Anzahl der permanenterregten Magnete, die wiederum leistungsabhängig ist. Je nach Größe bzw. erforderlicher Leistung des Motors liegt die Anzahl der Rotor-Segmente in einem hohen zweistelligen oder im dreistelligen Bereich.

Weiterhin bevorzugt sind die Segmente des Stators zu einem teilkreisförmigen Stator zusammengesetzt. Die Anzahl der Stator-Segmente ist hierbei leistungsabhängig. Die Stator-Segmente sind insbesondere größer dimensioniert als die Rotor-Segmente, es sind dadurch weniger Stator-Segmente erforderlich. Diese werden um den Rotor angeordnet und bilden insbesondere einen Teilkreis oder Bogen. Bei einer sehr hohen Anzahl an Stator-Segmenten können diese auch einen geschlossenen Kreis um den Rotor bilden.

Im Hinblick auf eine einfache Montage oder Wechsel, sind die Segmente des Rotors und/oder des Stators vorzugsweise über eine lösbare Verbindung an einer Tragkonstruktion des Motors befestigt. Beispielsweise werden die Segmente mit der Tragkonstruktion verschraubt. Es sind jedoch auch andere Arten von lösbaren kraft- oder formschlüssigen, Verbindungen denkbar.

Gemäß einer bevorzugten Ausgestaltung ist das Lagerungselement eine drehbare Welle, der Rotor ist auf der Welle rotierend gelagert und der Stator ist stationär auf der Welle befestigt. Insbesondere ist der Segmentmotor hierbei über den Rotor in einem rotierenden Teil der Arbeitsmaschine integriert.

Gemäß einer alternativen, bevorzugten Ausgestaltung ist das Lagerungselement eine feststehende Achse, der Rotor ist auf der Achse rotierbar gelagert und der Stator ist ortsfest an der Achse angeordnet.

Vorteilhafterweise ist der Motor für einen Betrieb bis 150 1/min, insbesondere bis 100 1/min vorgesehen. Der Motor, der insbesondere ein Synchronmotor ist, ist somit optimal für den Einsatz in einem Direktantrieb geeignet, bei welchem die Antriebsvorrichtung in der anzutreibenden Arbeitsmaschine integriert ist.

Die weitere Aufgabe wird weiterhin erfindungsgemäß gelöst durch eine Arbeitsmaschine für die Schwerindustrie, insbesondere für die Rohstoff- und Bergbauindustrie, umfassend eine solche Antriebsvorrichtung.

Die weitere Aufgabe wird schließlich erfindungsgemäß gelöst durch eine Verwendung einer solchen Antriebsvorrichtung als Direktantrieb in einer Arbeitsmaschine für die Schwerindustrie, insbesondere für die Rohstoff- und Bergbauindustrie.

Vorzugsweise ist die Antriebsvorrichtung als Direktantrieb ausgebildet. Unter Direktantrieb wird hierbei ein getriebeloser Antrieb verstanden, bei dem sich zwischen dem Antriebsmotor und einer Antriebswelle keinerlei Bauteile befinden, die die Rotordrehzahl in eine davon abweichende Antriebswellendrehzahl übersetzen. Die Antriebswelle wird somit mit gleicher Drehzahl gedreht, wie diese vom Rotor bzw. den Rotoren, wenn mehrere vorhanden sind, vorgegeben wird. Grundsätzlich ist für die Anwendung als Direktantrieb ein langsam laufender (die Anzahl der Umdrehungen pro Minute liegt hierbei im zweistelligen oder im unteren dreistelligen Bereich) Synchronmotor vorgesehen, der der Arbeitsmaschine ein hohes Drehmoment und eine kleine Drehzahl zur Verfügung stellt. Durch die Integration der Antriebsvorrichtung an oder in die Arbeitsmaschine werden erhebliche Gewichtseinsparungen erreicht. Separate Motorgehäuse, Motorenlager und Welle können entfallen, da die Segmente in bzw. an der Arbeitsmaschine integriert sind.

Zweckdienlicherweise ist die Arbeitsmaschine als ein Schaufelradbagger, ein Gurtförderer, ein Brecher, eine Mühle oder eine Schachtförderanlage ausgebildet. Der Einsatz von einem Direktantrieb mit einem Segmentmotor ist jedoch nicht auf die oben genannten Anwendungen beschränkt, es kommen auch andere elektrisch angetriebene Arbeitsmaschinen für den vorgesehenen Einsatz in der Rohstoff- und Bergbauindustrie, in Frage.

Ein Ausführungsbeispiel wird anhand einer Zeichnung näher erläutert. Hierin zeigen schematisch:
FIG 1 einen Längsschnitt durch eine erste Ausführung einer Antriebsvorrichtung,
FIG 2 einen Längsschnitt durch eine zweite Ausführung einer Antriebsvorrichtung, und
FIG 3 einen Längsschnitt durch eine Antriebstrommel eines Gurtförderers.

Gleiche Bezugszeichen haben in den Figuren die gleiche Bedeutung.

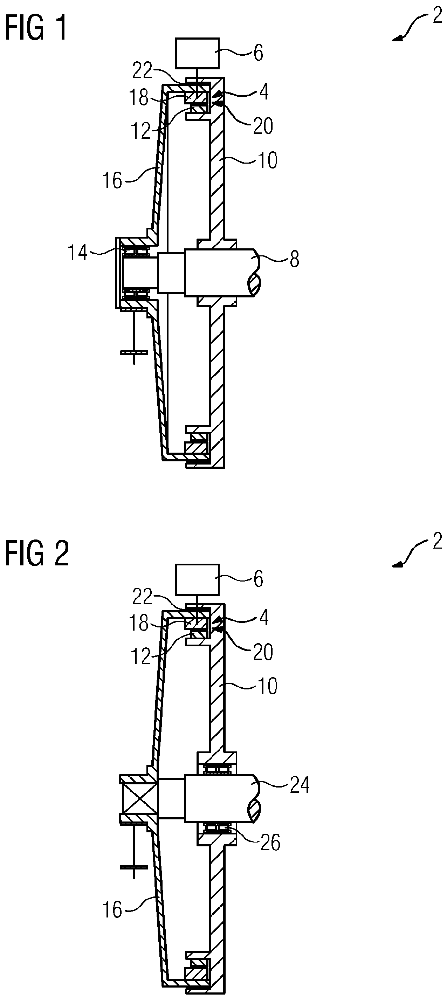

In FIG 1 und FIG 2 ist eine Antriebsvorrichtung 2 für die Applikation in der Bergbauindustrie (z.B. bei einem Schaufelradbagger, einer Mühle, einem Brecher, einem Gurtförderer, usw.) dargestellt. Die Antriebsvorrichtung 2 umfasst hierbei einen Segmentmotor 4 sowie einen symbolisch dargestellten Frequenzumrichter 6.

FIG 1 zeigt eine erste Ausführungsvariante der Antriebsvorrichtung, bei der auf einer drehbaren Welle 8 ein Rotor 10 des Segmentmotors 4 mit mehreren Segmenten 12 gelagert ist. Die Welle 8 ist endseitig in einem Lager 14 verlagert. Ein Stator 16, der mehrere Stator-Segmente 18 aufweist, ist ebenfalls auf der Welle 8 befestigt, jedoch stationär. Die Segmente 18 des Stators 16 werden einzeln vom Frequenzumrichter 6 mit elektrischem Strom versorgt.

Im gezeigten Ausführungsbeispiel sind die Segmente 12 des Rotors 10, weiterhin als Rotor-Segmente bezeichnet, kreisförmig um die Welle 8 angeordnet. Die Segmente 18 des Stators 16, weiterhin auch Stator-Segmente genannt, können ebenfalls einen Kreis bilden, werden jedoch insbesondere nach Art einer, hier nicht näher gezeigten bogen- oder teilkreisförmigen Formation angeordnet.

Die Anzahl der Rotor-Segmente 12 und die der Stator-Segmente 18 unterscheiden sich voneinander, da die Segmente 12, 18 unterschiedlich groß sind. Beispielsweise sind bei einem Schaufelradbagger insbesondere etwas über 100 Rotor-Segmente 12 vorgesehen, während die Anzahl der Stator-Segmente 18 abhängig von der Motorleistung insbesondere zwischen 12 und 16 variiert.

Der Rotor 10 und der Stator 16 sind mechanisch nicht miteinander verbunden, d.h. es besteht kein unmittelbarer Kontakt. Vielmehr ist zwischen den Rotor-Segmenten 12 und den Stator-Segmenten 18 ein Luftspalt 20 ausgebildet, der je nach Größe des Segmentmotors 4 und Anwendung z.B. zwischen 2 mm und 20 mm beträgt. Zum Schutz vor Verunreinigungen ist zudem zwischen dem Rotor 10 und dem Stator 16 eine Dichtung 22 vorgesehen.

Aus FIG 2 ist eine zweite Ausführungsvariante der Antriebsvorrichtung ersichtlich, bei der der Rotor 10 mit den Rotor-Segmenten 12 auf einer feststehenden Achse 24 angeordnet ist. Die Rotation des Rotors 10 auf der feststehenden Achse 24 wird durch ein Lager 26 ermöglicht. Bei dieser Ausführungsvariante ist der Rotor 10 direkt mit der jeweiligen Arbeitsmaschine verlagert. Der Rotor 10 ist dabei Bestandteil einer hier nicht gezeigten Arbeitsmaschine, d.h. der gesamte Segmentmotor 4 ist in der Arbeitsmaschine integriert. Dabei sind der Segmentmotor 4 und die Arbeitsmaschine auf derselben Achse angeordnet, so dass die Antriebsvorrichtung 2 nach Art eines Direktantriebs die Arbeitsmaschine antreibt.

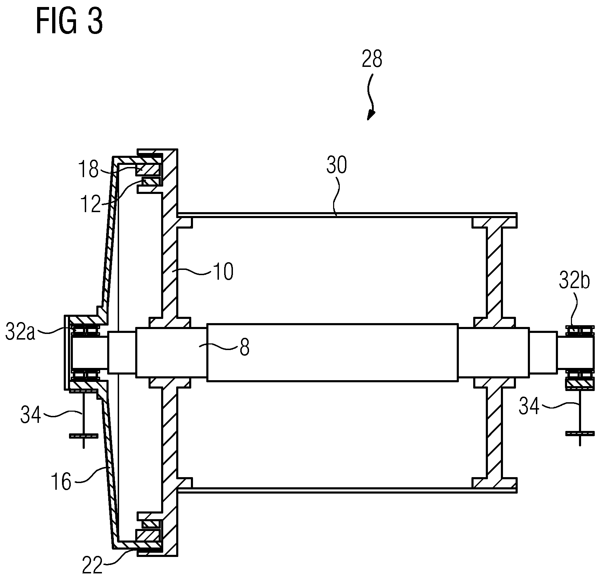

Für die Verbindung mit einer Arbeitsmaschine (z.B. Gurtförderer, Schaufelrad, Brecher, Schachtförderanlage) gibt es grundsätzlich zwei Möglichkeiten:
a) Der Rotor 10 oder der Stator 16 ist Bestandteil der Arbeitsmaschine. Dieser Fall ist am Beispiel einer Antriebstrommel 30 für einen Gurtförderer im Zusammenhang FIG 3 näher erläutert.
b) Die Arbeitsmaschine ist separat auf der Welle 8 oder der Achse 24 befestigt, jedoch teilen sich die Arbeitsmaschine und die Antriebsvorrichtung 2 dieselben Welle 8 bzw. Achse 24 (hier nicht dargestellt).

In FIG 3 ist ein Direktantrieb gezeigt. Als Arbeitsmaschine 28 ist gemäß FIG 3 ein Gurtförderer vorgesehen, der eine Antriebstrommel 30 aufweist. Die Antriebstrommel 30 ist im Bereich des Rotors 10 mit dem Segmentmotor 4 mechanisch verbunden, somit ist der Rotor 10 ein integraler Bestandteil der Antriebstrommel 30. Die gemeinsame Welle 8 ist in den Lagern 32a und 32b verlagert und über die Lager 32a, 32b mit einer Unterkonstruktion 34 (Stahlbaukonstruktion oder Fundament) verbunden.

Auf ähnliche Weise kann der Segmentmotor 4 in andere Applikationen in der Bergbauindustrie, z.B. in Schaufelradbaggern, Mühlen, Brechern, etc. integriert werden.

## Patentansprüche

1. Antriebsvorrichtung (2) für eine Arbeitsmaschine für die Schwerindustrie, insbesondere für die Rohstoff- und Bergbauindustrie,
umfassend einen permanentmagneterregten Motor (4) und einen Frequenzumrichter (6),
wobei der Motor (4) einen Rotor (10) und einen Stator (16) aufweist, wobei der Motor (4) ein Segmentmotor ist, bei dem der Rotor (10) und der Stator (16) aus mehreren Segmenten (12, 18) zusammengesetzt sind, und wobei die Segmente (18) des Stators (16) einzeln vom Frequenzumrichter (6) mit elektrischem Strom versorgbar sind,
wobei dass der Rotor (10) und der Stator (16) auf einem gemeinsamen Lagerungselement (8, 24) gelagert sind, wobei eine Ansteuerung der einzelnen Motorsegmente den Betrieb des Motors in Teillastbereichen erlaubt,
wobei der Rotor (10) einen ringförmigen, sich in Umfangsrichtung erstreckenden axial geöffneten Spalt bildet, der axial durch eine Rotorwandung sowie radial durch eine radial innenliegende ringförmige Rotorwandung und eine radial außenliegende ringförmige Rotorwandung begrenzt ist,
wobei der Stator derart im Spalt angeordnet ist, dass die auf der radial innenliegenden Rotorwandung angeordneten Rotorsegmente den dort gegenüberliegenden Statorsegmenten zugeordnet sind,
wobei zwischen der radial außenliegenden Rotorwandung und dem Stator (16) eine Dichtung (22) vorgesehen ist, die den im Bereich zwischen den Rotorsegmenten und den Statorsegmenten ausgebildeten Luftspalt vor dem Eindringen von Verunreinigungen schützt.

2. Antriebsvorrichtung (2) nach Anspruch 1,
wobei das Lagerungselement (8, 24) eine drehbare Welle (8) ist, der Rotor (10) auf der Welle (8) rotierend gelagert ist und der Stator (16) stationär auf der Welle (8) befestigt ist.

3. Antriebsvorrichtung (2) nach einem der vorhergehenden Ansprüche,
wobei das Lagerungselement (8, 24) eine feststehende Achse (24) ist, der Rotor (10) auf der Achse (24) rotierbar gelagert ist und der Stator (16) ortsfest an der Achse (24) angeordnet ist.

4. Antriebsvorrichtung (2) nach einem der vorhergehenden Ansprüche,
wobei die Segmente (12) des Rotors (10) kreisförmig angeordnet sind.

5. Antriebsvorrichtung (2) nach einem der vorhergehenden Ansprüche,
wobei die Segmente (18) des Stators (16) zu einem teilkreisförmigen Stator (16) zusammengesetzt sind.

6. Antriebsvorrichtung (2) nach einem der vorhergehenden Ansprüche,
wobei die Segmente (12, 18) des Rotors (10) und/oder des Stators (16) über eine lösbare Verbindung an einer Tragkonstruktion des Motors (4) befestigt sind.

7. Antriebsvorrichtung (2) nach einem der vorhergehenden Ansprüche,
wobei der Motor für einen Betrieb bis 150 1/min, insbesondere bis 100 1/min vorgesehen ist.

8. Arbeitsmaschine (28) für die Schwerindustrie, insbesondere für die Rohstoff- und Bergbauindustrie, umfassend eine Antriebsvorrichtung (2) nach einem der vorhergehenden Ansprüche.

9. Arbeitsmaschine (28) nach Anspruch 7,
wobei die Antriebsvorrichtung (2) als Direktantrieb ausgebildet ist.

10. Arbeitsmaschine (28) nach Anspruch 7 oder 8,
die als ein Schaufelradbagger, ein Gurtförderer (28), ein Brecher, eine Mühle oder eine Schachtförderanlage ausgebildet ist.

11. Verwendung einer Antriebsvorrichtung (2) nach einem der Ansprüche 1 bis 6 als Direktantrieb in einer Arbeitsmaschine (28) für die Schwerindustrie, insbesondere für die Rohstoff- und Bergbauindustrie.

## Claims

1. Drive device (2) for a work machine for heavy industry, in particular for the extractive and mining industries,
comprising a permanent-magnet motor (4) and a frequency converter (6),
wherein the motor (4) has a rotor (10) and a stator (16), the motor (4) being a segment motor, in which the rotor (10) and the stator (16) are composed of a plurality of segments (12, 18), and the segments (18) of the stator (16) being able to be individually supplied with electrical current by the frequency converter (6),
wherein the rotor (10) and the stator (16) are mounted on a common bearing element (8, 24), with activation of the individual motor segments allowing the operation of the motor in partial load ranges,
wherein the rotor (10) forms an annular, axially open gap which extends in the circumferential direction and is delimited axially by a rotor wall and radially by a radially internal annular rotor wall and a radially external annular rotor wall,
wherein the stator is arranged in the gap in such a way that the rotor segments arranged on the radially internal rotor wall are assigned to the opposite stator segments there,
wherein a seal (22) is provided between the radially external rotor wall and the stator (16), the seal protecting the air gap formed in the region between the rotor segments and the stator segments from the ingress of impurities.

2. Drive device (2) according to Claim 1,
wherein the bearing element (8, 24) is a rotatable shaft (8), the rotor (10) is mounted rotationally on the shaft (8) and the stator (16) is fastened in a stationary manner on the shaft (8).

3. Drive device (2) according to either of the preceding claims,
wherein the bearing element (8, 24) is a fixed axle (24), the rotor (10) is mounted rotatably on the axle (24), and the stator (16) is arranged in a stationary manner on the axle (24).

4. Drive device (2) according to any one of the preceding claims,
wherein the segments (12) of the rotor (10) are arranged in a circle.

5. Drive device (2) according to any one of the preceding claims,
wherein the segments (18) of the stator (16) are assembled to form a partially circular stator (16).

6. Drive device (2) according to any one of the preceding claims,
wherein the segments (12, 18) of the rotor (10) and/or of the stator (16) are fastened to a supporting structure of the motor (4) via a releasable connection.

7. Drive device (2) according to any one of the preceding claims,
wherein the motor is provided for operation up to 150 1/min, in particular up to 100 1/min.

8. Work machine (28) for heavy industry, in particular for the extractive and mining industries, comprising a drive device (2) according to any one of the preceding claims.

9. Work machine (28) according to Claim 8,
wherein the drive device (2) is designed as a direct drive.

10. Work machine (28) according to Claim 7 or 8,
which is designed as a bucket wheel excavator, a belt conveyor (28), a crusher, a mill or a shaft hoisting system.

11. Use of a drive device (2) according to any one of Claims 1 to 6 as a direct drive in a work machine (28) for heavy industry, in particular for the extractive and mining industries.

## Revendications

1. Dispositif d'entraînement (2) pour une machine de travail pour l'industrie lourde, en particulier pour l'industrie des matières premières et l'industrie minière,
comprenant un moteur (4) à excitation par aimant permanent et un convertisseur de fréquence (6),
le moteur (4) comportant un rotor (10) et un stator (16), le moteur (4) étant un moteur segmenté, dans lequel le rotor (10) et le stator (16) sont composés de plusieurs segments (12, 18), et les segments (18) du stator (16) pouvant être alimentés individuellement en courant électrique par le convertisseur de fréquence (6),
le rotor (10) et le stator (16) étant montés sur un élément de palier commun (8, 24), un pilotage des divers segments du moteur permettant le fonctionnement du moteur dans des plages de charge partielle,
le rotor (10) formant une fente annulaire ouverte axialement, s'étendant dans la direction périphérique, qui est délimitée axialement par une paroi de rotor et radialement par une paroi de rotor annulaire radialement intérieure et une paroi de rotor annulaire radialement extérieure,
le stator étant disposé dans la fente de telle manière que les segments de rotor disposés sur la paroi de rotor radialement intérieure sont associés aux segments de stator opposés à cet endroit,
un joint d'étanchéité (22) étant prévu entre la paroi de rotor radialement extérieure et le stator (16), lequel protège l'entrefer formé dans la zone entre les segments de rotor et les segments de stator contre la pénétration d'impuretés.

2. Dispositif d'entraînement (2) selon la revendication 1,
l'élément de palier (8, 24) étant un arbre rotatif (8), le rotor (10) étant monté de manière à pouvoir tourner sur l'arbre (8) et le stator (16) étant fixé de manière stationnaire sur l'arbre (8).

3. Dispositif d'entraînement (2) selon l'une des revendications précédentes,
l'élément de palier (8, 24) étant un axe fixe (24), le rotor (10) étant monté de manière à pouvoir tourner sur l'axe (24) et le stator (16) étant monté de manière stationnaire sur l'axe (24).

4. Dispositif d'entraînement (2) selon l'une des revendications précédentes,
les segments (12) du rotor (10) étant disposés de manière circulaire.

5. Dispositif d'entraînement (2) selon l'une des revendications précédentes,
les segments (18) du stator (16) étant assemblés pour former un stator (16) en partie circulaire.

6. Dispositif d'entraînement (2) selon l'une des revendications précédentes,
les segments (12, 18) du rotor (10) et/ou du stator (16) étant fixés sur une structure de support du moteur (4) par une liaison amovible.

7. Dispositif d'entraînement (2) selon l'une des revendications précédentes,
le moteur étant prévu pour fonctionner jusqu'à 150 1/min, en particulier jusqu'à 100 1/min.

8. Machine de travail (28) pour l'industrie lourde, en particulier pour l'industrie des matières premières et l'industrie minière, comprenant un dispositif d'entraînement (2) selon l'une des revendications précédentes.

9. Machine de travail (28) selon la revendication 8, le dispositif d'entraînement (2) étant formé comme un entraînement direct.

10. Machine de travail (28) selon la revendication 8 ou 9,
qui est formée comme un excavateur à roue à godets, un convoyeur à bande (28), un concasseur, un broyeur ou une installation de convoyeur à arbre.

11. Utilisation d'un dispositif d'entraînement (2) selon l'une des revendications 1 à 6 comme entraînement direct dans une machine de travail (28) pour l'industrie lourde, en particulier pour l'industrie des matières premières et l'industrie minière.
